# EUROPEAN PATENT SPECIFICATION

(11) **EP 0 830 064 B1**
(45) Date of publication and mention of the grant of the patent: **15.01.2003**
(21) Application number: 97908148.6
(22) Date of filing: 17.03.1997
(51) Int. Cl.: A21B 1/40, F24C 15/32

(54) **AN OVEN FOR THE PREPARATION OF FOOD**
OFEN FÜR DIE ZUBEREITUNG VON NAHRUNG
FOUR POUR LA PREPARATION D'ALIMENTS

(30) Priority: 15.03.1996 DK 41696
(43) Date of publication of application: 25.03.1998
(73) Proprietor: AKTIEBOLAGET ELECTROLUX, 105 45 Stockholm (SE)
(72) Inventor: ESKILDSEN, Christian, DK-5591 Gelsted (DK)
(74) Representative: Svahn, Göran
(86) International application number: DK9700116
(87) International publication number: WO97034491

(56) References cited:
- EP-A- 0 340 736
- WO-A-95/27399
- FR-A- 2 552 628
- US-A- 4 051 347
- US-A- 4 367 388
- US-A- 4 374 319

## Description

The invention relates to an oven for the preparation of food.

There are three predominant types of oven available to the consumer. The first type to be discussed has a cavity made of sheet metal and is heated from the outside, e.g. by means of an electric heating element disposed near the metal. The transfer mechanism relied on to transfer heat energy to the food is predominantly radiation. The cavity reaches a high temperature and for this reason it is both resistant to this temperature and heavily insulated, and the material of the cavity has a large heat capacity and will continue to radiate heat even after the power has been switched off. This construction is heavy and bulky.

The second type is based on the circulation of heated air, either heated by being in the cavity as above or externally generated and re-circulated. The transfer mechanism is predominantly one of convection. The temperature in the cavity is essentially the same as above, and hence the insulation has to have a comparable thickness. This means that this oven has a similar weight and bulk.

The third type is based on the generation of heat inside the foodstuff itself by irradiating it with microwave energy. This means that the cavity does not reach a high temperature, and hence it can be made of a less heat resistant material, and in principle it does not need to be insulated. The main use of the cavity is to prevent the microwaves from escaping. The weight predominantly comes from the transformer and magnetron used. The range of food that may be simply be prepared in a microwave oven is limited, both because it does not heat evenly, but also because the appearance and texture of the prepared food is not always identical to the results of more traditional ovens.

It is known to provide several of the above features in one and the same oven, but this is additive both as regards bulk and weight, although certain advantages may be had by combining the heating mechanisms for the preparation of food.

There has hence been recognized a need for an oven which will inherently have a low-temperature cavity, reducing the need for insulation thickness and thereby permitting built-in solutions for kitchens without the risk of temperature build-up and consequent fire risk. It has been recognized that this may be obtained without the use of microwaves.

The document US-A-4051347 discloses an oven in which control means are provided for maintaining the temperature value between about 125 °C och 135 °C.

The document US-A-4374319 discloses an oven adapted to effect low-temperature cooking of food at a relatively rapid rate. The oven comprises a cavity, means for transferring heated gas as well as a radiating line source of heat across the top of the food.

In accordance with the preamble of appending claim 1 the invention relates to an oven for the preparation of food (F) at a temperature not exceeding 150°C, said oven comprising a cavity (1), means (3,4,5) for transferring heated gas to the food (F) as well as a radiating line source of heat across the top of the food. In accordance with the invention the oven is characterized in that a quartz halogen filament in a bulb (16), mounted on a carriage which may scan the food (M), is normally hidden in a compartment (15) outside the cavity (1).

The invention is based on the realization that the heat energy uptake of the food is a varying quantity over the time that it takes to prepare the food, and furthermore that the efficiency with which traditional ovens function is very variable. This means that certain food items may be prepared with a simple control of temperature and volume velocity, while other food items may require more complex control, however at much lower temperatures than has traditionally been the case. Furthermore, the high surface temperature is applied in a localized fashion exactly where and when it is needed for the preparation of the food.

An advantageous embodiment is particular in that the gas is air with an admixture of a condensable substance such as water vapour. This creates the possibility of both using the water vapour as a transfer medium by condensation and for controlling the moisture content of the surface of the food.

A further advantageous embodiment is particular in that the volume velocity of gas is controlled by the progress of heating of food. The control may be performed by measuring the instantaneous degree of preparation and by increasing or decreasing the volume velocity.

A further advantageous embodiment is particular in that the temperature of the gas is controlled by the progress of heating of food. The control may be performed by measuring the instantaneous degree of preparation and by increasing or decreasing the temperature. In combination with the control of the volume velocity it is possible to obtain exactly the heat transfer which is needed by the food in any particular instant.

The major advantage of the oven according to the invention is the possibility of using low-temperature materials for all oven components. This advantage is obtained, although the preparation time for the food is not increased over traditional methods.

The invention will be described in greater detail with reference to the drawing in which
Fig. 1 shows a schematic diagram of the temperature and volume velocity control of an oven according to the invention, and
Fig. 2 shows an embodiment comprising a browning feature.

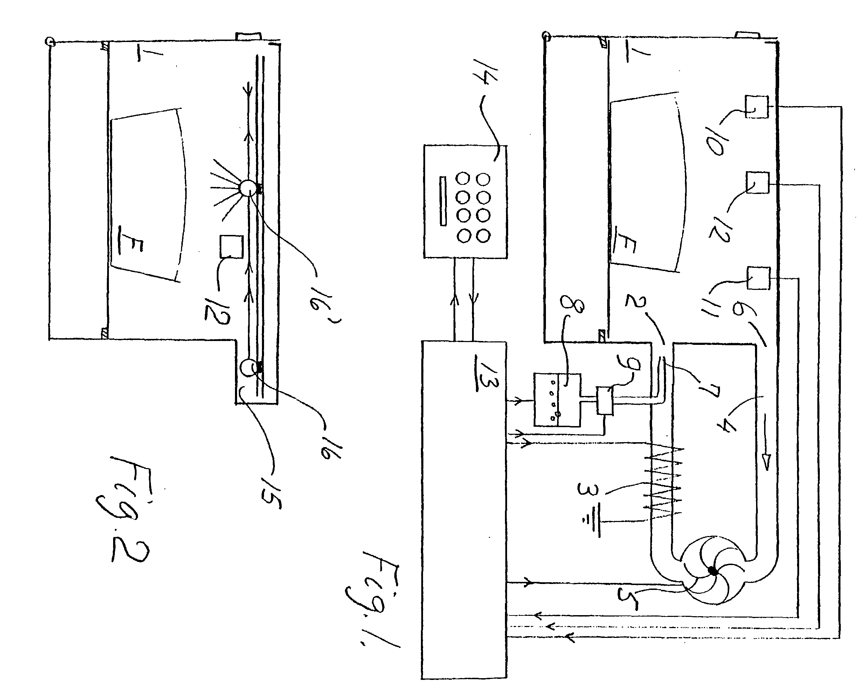

In Fig. 1 is seen an oven cavity 1 with a supply of heated air through an inlet opening 2. The heated air is generated in a heater 3 which is placed in a duct 4 where air is caused to move by means of a ventilator 5. Food F is present in the cavity. The outlet of air 6 in the cavity 1 is connected to the duct 4. Near the inlet opening 2 there is provided a nozzle 7 which provides steam from a steam generator 8 via a control valve 9. Temperature sensing means 10 and moisture sensing means 11 as well as surface reflectance measuring means 12 are present in the cavity 1, and the signals are fed to a control computer 13 which controls the heating of the air fed through the inlet 2 and the possible supply of steam via the valve 9. The capacity of the ventilator 5 is also controlled electronically. The control computer receives its input from the user by means of control buttons on an operating panel 14 on which the type of food may also be entered. The control computer 13 also contains a memory with reference values for the food selected.

The outlet 6 from the cavity may be connected to a part of the duct (not shown) which is made to condense moisture driven out of the food through heating. In this way, the inside of the food may give off moisture without making the outside or crust too dry, because steam may be supplied when required by the control.

In Fig. 2 is shown an implement which normally is hidden in a compartment 15 outside the cavity. This is a quartz halogen filament in a bulb 16 which is mounted on a carriage which may scan the food F. Hiding it in a separate compartment ensures that the surface is not contaminated by fumes given off by the food F during the cooking. The surface reflectance measuring means 12 provide an input signal to the control computer 13 in order that the correct degree of browning is obtained. In case it is only a drying of the surface which is desired, the change in humidity measured by the moisture sensing means 11 after the halogen lamp 16 has been activated and scanned is used to control the time of scan and temperature of the filament.

## Claims

1. An oven for the preparation of food (F) at a temperature not exceeding 150°C, said oven comprising a cavity (1), means (3,4,5) for transferring heated gas to the food (F) as well as a radiating line source of heat across the top of the food, **characterized in that** a quartz halogen filament in a bulb (16), mounted on a carriage which may scan the food (M), is normally hidden in a compartment (15) outside the cavity (1).

2. An oven according to claim 1, **characterized by** control means (13) controlling the volume velocity of the heated gas.

3. An oven according to claim 2, **characterized in that** the volume velocity of the heated gas is controlled by the progress of heating of the food (F).

4. An oven according to any of claims 2- 4, **characterized in that** the control means (13) are adapted to control the temperature of the heated gas by the progress of heating of the food (F).

5. An oven according to any of the preceding claims, **characterized in that** the gas consists of air with an admixture of a condensable substance such as water vapour.

## Patentansprüche

1. Herd für die Zubereitung von Nahrungsmitteln (F) bei einer Temperatur, die 150 °C nicht übersteigt, wobei der besagte Herd einen Hohlraum (1), Mittel (3, 4, 5) zur Übertragung des erhitzten Gases auf das Nahrungsmittel (F) sowie eine Linienstrahler-Wärmequelle über der Oberseite des Nahrungsmittels umfasst, **dadurch gekennzeichnet, dass** ein Quarz-Halogen-Heizfaden in einem Kolben (16) normalerweise in einem Abteil (15) außerhalb des Hohlraums (1) verborgen untergebracht ist, wobei dieser Kolben auf einem Träger montiert ist, der das Nahrungsmittel (F) abtasten kann.

2. Herd nach Anspruch 1, **gekennzeichnet durch** Steuermittel (13), welche die Volumenschnelle des erhitzten Gases steuern.

3. Herd nach Anspruch 2, **dadurch gekennzeichnet, dass** die Volumenschnelle des erhitzten Gases durch den Fortschritt des Erhitzens des Nahrungsmittels (F) gesteuert wird.

4. Herd nach Anspruch 2 bis 3, **dadurch gekennzeichnet, dass** die Steuermittel (13) so ausgelegt sind, dass sie die Temperatur des erhitzten Gases nach dem Fortschritt des Erhitzens des Nahrungsmittels (F) steuern.

5. Herd nach einem der vorangehenden Ansprüche, **dadurch gekennzeichnet, dass** das Gas aus Luft mit einer Beimischung einer kondensierbaren Substanz wie beispielsweise Wasserdampf besteht.

## Revendications

1. Four pour la préparation d'aliments (F) à une température ne dépassant pas 150°C, ledit four comprenant une cavité (1), des moyens (3, 4, 5) destinés à transférer un gaz chauffé aux aliments (F), ainsi qu'une source de ligne de rayonnement de chaleur en travers de la partie supérieure des aliments, **caractérisé en ce qu'**un filament halogène à quartz dans une ampoule (16), montée sur un chariot pouvant balayer les aliments (M), est normalement masqué dans un compartiment (15) extérieur à la cavité (1).

2. Four selon la revendication 1, **caractérisé en ce que** des moyens de commande (13) commandant la vitesse du volume du gaz chauffé.

3. Four selon la revendication 2, **caractérisé en ce que** la vitesse du volume du gaz chauffé est commandée par l'avancement de l'échauffement des aliments (F).

4. Four selon l'une quelconque des revendications 2 à 4, **caractérisé en ce que** les moyens de commande (13) sont conçus pour commander la température du gaz chauffé par l'avancement de l'échauffement des aliments (F).

5. Four selon l'une quelconque des revendications précédentes, **caractérisé en ce que** le gaz est constitué d'air avec un mélange ajouté d'une substance condensable, de la vapeur d'eau par exemple.
